# EUROPÄISCHE PATENTSCHRIFT

(11) **EP 1 862 744 B1**
(45) Veröffentlichungstag und Bekanntmachung des Hinweises auf die Patenterteilung: **11.04.2012**
(21) Anmeldenummer: 07002869.1
(22) Anmeldetag: 10.02.2007
(51) Int. Cl.: F24C 15/20, F24F 7/08

(54) **Raumlüftungssystem**
Room ventilation system
Système d'aération de pièce

(30) Priorität: 02.06.2006 DE 202006008757 U
(43) Veröffentlichungstag der Anmeldung: 05.12.2007
(73) Patentinhaber: Zehnder Verkaufs- und Verwaltungs AG, 5722 Gränichen (CH)
(72) Erfinder: Kriesi, Ruedi, Dr., 8820 Wädenswil (CH)
(74) Vertreter: Stenger, Watzke & Ring

(56) Entgegenhaltungen:
- AU-B2- 525 994
- DE-A1- 4 039 855
- FR-A1- 2 855 251
- US-A- 4 103 676

## Beschreibung

Die vorliegende Erfindung bezieht sich auf ein Raumlüftungssystem, das insbesondere zum Lüften von Wohnungen und Büros verwendet wird.

Raumlüftungssysteme der genannten Art umfassen normalerweise zumindest eine Zuluftleitung, eine Abluftleitung und ein Lüftungsgerät zum Ansaugen von Frischluft durch die Zuluftleitung und Ausstoßen von Abluft durch die Abluftleitung. Mit derartigen Raumlüftungssystemen kann Frischluft von außen durch die Zuluftleitung in die zu belüftenden Räumlichkeiten geleitet werden, während verbrauchte Abluft aus den Räumlichkeiten über die Abluftleitung ins Freie abgeführt wird, so daß das Raumklima in den zu lüftenden Räumlichkeiten bedarfsgerecht eingestellt werden kann. Die Raumlüftungssysteme können getrennt gesteuerte Zu- und Abluft-Kreisläufe für einzelne Räume umfassen, um das Raumklima der verschiedenen Räume unabhängig voneinander einstellen zu können. Der zugeführte Gesamtfrischluftvolumenstrom entspricht normalerweise dem abgeführten Gesamtabluftvolumenstrom, um Druckschwankungen innerhalb der zu lüftenden Räumlichkeiten zu vermeiden. Insbesondere soll die Entstehung eines Unterdruckes in den zu lüftenden Räumlichkeiten verhindert werden, da ein solcher Unterdruck beispielsweise den Betrieb einer offenen Feuerstelle unmöglich macht.

Aus der FR 2855251 A1 ist ein Raumlüftungssystem mit zumindest einer Zuluftleitung, zumindest einer Abluftleitung, einem Lüftungsgerät zum Ansaugen von Frischluft durch die Zuluftleitung und Ausstoßen von Abluft durch die Abluftleitung bekannt. Zudem zeigt diese Druckschrift eine Umschalteinrichtung, die geeignet ist entweder eine Abluftleitung aus einer Küche oder eine Abluftleitung aus einem Badezimmer bzw. einer Toilette teilweise abzusperren.

Ferner sind Raumlüftungssysteme für Küchen mit einer Dunstabzugshaube, einer Abluftleitung einer Küchenhaube und einem Lüftungsgerät zum Ansaugen und Ausstoßen der bei der Speisenzubereitung entstehenden Dämpfe durch die Abluftleitung der Küchenhaube bekannt. Bei derartigen Raumlüftungssystemen können Dämpfe nach dem Ansaugen über die Dunstabzugshaube entweder gefiltert und über die Abluftleitung der Küchenhaube zurück in die Küche geleitet werden oder, was normalerweise bevorzugt ist, gefiltert oder ungefiltert über die Abluftleitung der Küchenhaube nach außen direkt ins Freie abgeführt werden. Da bei derartigen Raumlüftungssystemen Luft abgesaugt, jedoch keine Frischluft zugeführt wird, entsteht während des Betriebs der Dunstabzugshaube in der Küche normalerweise ein unerwünschter Unterdruck, der beispielsweise den Betrieb einer offenen Feuerstelle unmöglich macht.

Die Raumlüftungssysteme der zuvor beschriebenen Art können entweder einzeln oder nebeneinander als separate Systeme in Wohnungen oder Häusern eingebaut werden.

Es ist eine **Aufgabe** der vorliegenden Erfindung, ein verbessertes Raumlüftungssystem zu schaffen.

Diese Aufgabe wird gemäß der vorliegenden Erfindung durch ein Raumlüftungssystem nach Anspruch 1 **gelöst**. Die abhängigen Ansprüche beziehen sich auf individuelle Ausgestaltungen der vorliegenden Erfindung.

Das Raumlüftungssystem gemäß der vorliegenden Erfindung umfaßt zumindest eine Zuluftleitung, zumindest eine Abluftleitung und ein Lüftungsgerät zum Ansaugen von Frischluft durch die Zuluftleitung und Ausstoßen von Abluft durch die Abluftleitung. Bevorzugt sind getrennt gesteuerte Zu- und Abluftventilatoren vorgesehen, so daß der Lüftungsbetrieb bei unterschiedlichen Druckverlusten der Zu- und Abluftleitungen trotzdem zu keinen Druckschwankungen im Innenraum führt.

Erfindungsgemäß umfaßt das Raumlüftungssystem ferner ein Anschlußelement, über das eine Abluftleitung einer Küchenhaube an die Abluftleitung des Raumlüftungssystems angeschlossen ist. Die bekannten Raumlüftungssysteme werden also gemäß der vorliegenden Erfindung in einem einzelnen Raumlüftungssystem zusammengefaßt. Auf diese Weise ergeben sich deutliche Kostenvorteile, da für zu belüftende Wohnungen oder Häuser nur noch ein Paar Leitungen zum Keller oder Wanddurchführungen erforderlich sind. Zudem ist der Betrieb der Dunstabzugshaube nicht mehr mit kalter Zuluft zur Küche verbunden und führt auch nicht mehr zu einem Unterdruck in den zu belüftenden Räumlichkeiten, da auch hier der Frischluftvolumenstrom und der Abluftvolumenstrom derart einstellbar sind, daß sie einander entsprechen.

Ferner verfügt das Raumlüftungssystem erfindungsgemäß über ein Absperrventil, das bei Überschreiten einer vorbestimmten Temperatur die Abluftleitung der Küchenhaube zu Brandschutzzwecken absperrt. Schließlich ist erfindungsgemäß eine Umschalteinrichtung vorgesehen, die eine strömungstechnische Verbindung zwischen der Abluftleitung der Küchenhaube und der Abluftleitung wahlweise öffnet oder zumindest teilweise absperrt und gleichzeitig die Abluftleitung zum Verteilerkasten schliesst oder zumindest teilweise schliesst oder öffnet.

Bevorzugt ist das Absperrventil federbelastet ausgebildet, so daß dieses auch bei Stromausfall zuverlässig schließt.

Ferner ist vorteilhaft ein Temperatursensor in der Abluftleitung und/oder in der Abluftleitung der Küchenhaube vorgesehen, um die Temperatur der Abluft genau zu erfassen und basierend auf der erfaßten Temperatur das Absperrventil zu steuern.

Die Umschalteinrichtung ist derart eingerichtet, daß sie die strömungstechnische Verbindung zwischen Abluftleitung der Küchenhaube und Abluftleitung bei Erreichen einer vorbestimmten Temperatur zumindest teilweise absperrt. Die strömungstechnische Verbindung wird nicht vollständig abgesperrt, so daß weiterhin ein vorbestimmter und vorteilhaft einstellbarer Teil der Abluft aus der Abluftleitung der Küchenhaube oder aus dem Verteilerkasten abgesaugt wird. Alternativ kann die Umschalteinrichtung die strömungstechnischen Verbindungen aber auch vollständig absperren. Die vorbestimmte Temperatur zum Absperren der strömungstechnischen Verbindung zwischen Abluftleitung der Küchenhaube und Abluftleitung ist dabei vorteilhaft geringer als die vorbestimmte Temperatur zum Absperren des Absperrventils gewählt, so daß die Umschalteinrichtung die strömungstechnische Verbindung zwischen der Abluftleitung der Küchenhaube und der Abluftleitung absperrt, bevor das Absperrventil schließt. Dies ist dahingehend von Vorteil, daß die Umschalteinrichtung nach Quittieren der Steuerung normal weiter funktioniert, während das Absperrventil nach dem Auslösen ersetzt werden müßte.

Ferner umfaßt das erfindungsgemäße Raumlüftungssystem bevorzugt einen Wärmetauscher zum Wärmetausch zwischen Zu- und Abluft, wobei es sich vorteilhaft um einen Kreuzgegenstrom-Wärmetauscher handelt. Auf diese Weise können etwa 90 % der Wärmeenergie zurückgewonnen werden, was insbesondere im Winter die Heizkosten senkt. Der Wärmetauscher ist dabei bevorzugt in dem Lüftungsgerät integriert.

Ferner umfaßt das erfindungsgemäße Raumlüftungssystem vorteilhaft einen Erdwärmetauscher, der die Erde als trägen Speicher nutzt, so daß Frischluft, ehe sie von außen in die zu lüftenden Räumlichkeiten gelangt, im Winter vorgewärmt bzw. im Sommer vorgekühlt wird. Im Winter können somit die Heizkosten verringert werden, während im Sommer automatisch eine angenehme Kühlung der Frischluft erfolgt.

Schließlich kann das Raumlüftungssystem gemäß der vorliegenden Erfindung zumindest einen Filter aufweisen, wie beispielsweise einen Pollen- und/oder Außenstaubfilter, wodurch ein allergiefreies Klima innerhalb der zu lüftenden Räumlichkeiten eingestellt werden kann.

Nachfolgend wird die vorliegende Erfindung anhand eines Ausführungsbeispiels des erfindungsgemäßen Raumlüftungssystems unter Bezugnahme auf die Zeichnung genauer beschrieben. Darin ist:
- Fig. 1: eine schematische Ansicht eines Hauses, in das eine Ausführungsform des erfindungsgemäßen Raumlüftungssystems eingebaut ist, und
- Fig. 2: eine. Detailansicht, die den Anschluß einer Küchenhaube an die Abluftleitung des erfindungsgemäßen Raumlüftungssystem zeigt.

Gleiche Bezugsziffern beziehen sich nachfolgend auf gleichartige Bauteile.

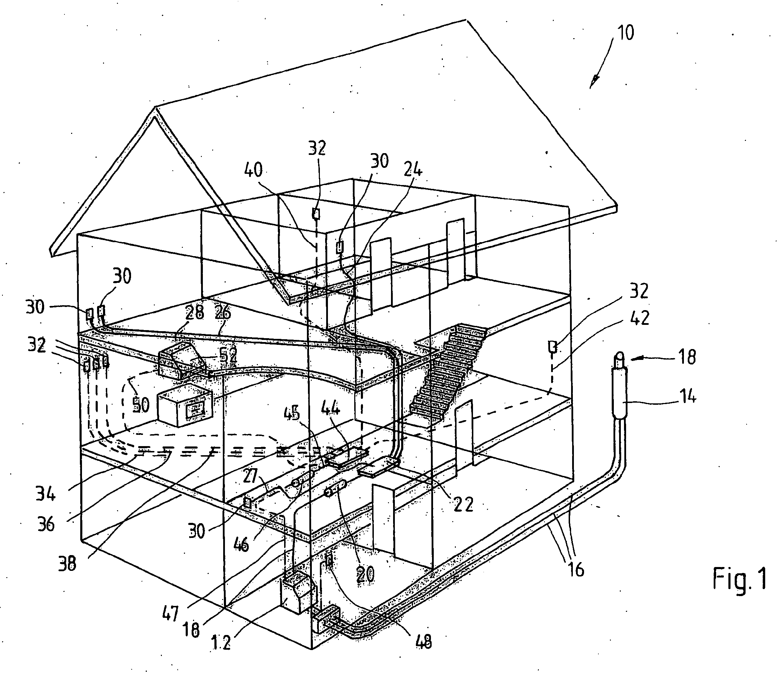

Fig. 1 zeigt ein Haus 10 in perspektivischer Ansicht, in dem eine Ausführungsform des erfindungsgemäßen Raumlüftungssystems angeordnet ist. Das Raumlüftungssystem umfaßt ein Lüftungsgerät 12, das Frischluft über eine außerhalb des Hauses 10 angeordnete Ansaugeinrichtung 14 durch unterirdisch verlegte Zuluftleitungen 16 ansaugt, was durch den Pfeil 18 angedeutet ist. Die angesaugte Frischluft wird durch eine weitere Zuluftleitung 18 über einen Schalldämpfer 20 zu einem Luftverteilerkasten 22 geleitet, der diese dann bedarfsgerecht über weitere Zuluftleitungen 24, 26, 27 und 28 in die zu belüftenden Räumlichkeiten weiterleitet, wo die Frischluft schließlich durch entsprechende Luftdurchlaßgehäuse 30 einströmt.

Die Abluft wird von dem Lüftungsgerät angesaugt und strömt durch Luftdurchlaßgehäuse 32 über Abluftleitungen 34, 36, 38, 40 und 42 zu einem weiteren Verteilerkasten 44, von dem aus sie gesammelt durch eine Abluftleitung 45, einen Schalldämpfer 46 und eine Abluftleitung 47 zum Lüftungsgerät 12 gefördert wird. In das Lüftungsgerät 12 ist ein Wärmetauscher, vorzugsweise ein Kreuzgegenstrom-Wärmetauscher integriert, der dazu dient, an kalten Tagen die kühle Frischluft mittels der warmen Abluft vorzuwärmen. Auf diese Weise lassen sich bis zu 90 % der Wärme zurückgewinnen. Die Abluft wird schließlich an ein Luftauslaßgehäuse 48 weitergeleitet und strömt ins Freie.

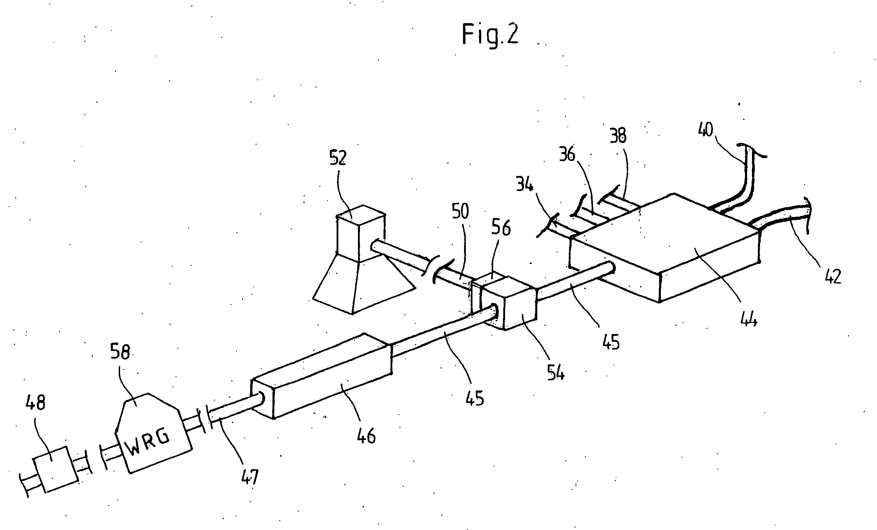

An die Abluftleitung 45 zwischen dem Verteilerkasten 44 und dem Schalldämpfer 46 ist erfindungsgemäß eine Küchenhaubenabluftleitung 50 angeschlossen, über die die von einer Küchenhaube 52 angesaugte Abluft dem Abluftsystem des Raumlüftungssystems zugeführt werden kann, was unter Bezugnahme auf Fig. 2 noch näher erläutert ist.

Fig. 2 ist eine Detailansicht, die den Anschluß der Abluftleitung einer Küchenhaube 50 der Küchenhaube 52 an die Abluftleitung 45 genauer zeigt. Die Abluzftleitung der Küchenhaube 50 ist über ein Anschlußelement 54 mit der Abluftleitung 45 verbunden. In das Anschlußelement 54 ist ein nicht dargestelltes Absperrventil integriert, das bei Überschreiten einer vorbestimmten Temperatur, die über einen ebenfalls nicht dargestellten Temperatursensor erfaßt wird, die Abluftleitung der Küchenhaube 50 absperrt. Ferner verfügt das Anschlußelement 54 über eine nicht gezeigte Umschalteinrichtung, die die strömungstechnische Verbindung zwischen der Abluftleitung der Küchenhaube 50 und der Abluftleitung 45 wahlweise öffnet oder absperrt. Ist die Küchenhaube 52 in Betrieb, so wird die strömungstechnische Verbindung geöffnet und die Abluftleitung 45 zum Verteilerkasten 44 ganz oder teilweise verschlossen, so daß die über die Küchenhaube 52 angesaugte Abluft über die Abluftleitung der Küchenhaube 50 und die Abluftleitung 45 abgeführt werden kann. Ist die Küchenhaube 52 hingegen ausgeschaltet, so sperrt die in das Anschlußelement 54 integrierte Umschalteinrichtung die strömungstechnische Verbindung zwischen der Abluftleitung der Küchenhaube 50 und der Abluftleitung 45 teilweise ab, so daß weiterhin ein vorbestimmter Teil der Abluft aus der Abluftleitung der Küchenhaube 50 abgesaugt und abgeführt wird.

Ein wesentlicher Vorteil des erfindungsgemäßen Raumlüftungssystems besteht darin, daß durch die Integration von Küchenhaube und Abluftleitung der Küchenhaube in das Raumlüftungssystem weniger Leitungen bzw. Rohre verlegt werden müssen. Auch wird damit erreicht, daß das Lüftungsgerät 12 die Luftleitungen 46, 16 und die Verteilelemente 20, 22, 44, 48, 49 nicht größer dimensioniert werden müssen als für die Raumlüftung üblich und trotzdem genug Abluft aus der Küchenhaube für eine gute Dunsterfassung abgesaugt werden kann. Ferner entsteht während des Betriebs der Küchenhaube kein Unterdruck, der den Betrieb einer offenen Feuerstelle behindert.

Durch die Anordnung des Absperrventils, der Umschalteinrichtung und des Temperatursensors wird der ordnungsgemäße Betrieb des erfindungsgemäßen Raumlüftungssystems sichergestellt. Darüber hinaus kann über die Einheit 58 zur Wärmerückgewinnung (WRG) eine Wärmerückgewinnung durchgeführt werden.

Es sollte klar sein, daß die zuvor beschriebene Ausführungsform des erfindungsgemäßen Raumlüftungssystems nicht einschränkend ist. Vielmehr sind Änderungen und Modifikationen möglich, ohne den Schutzbereich der vorliegenden Erfindung zu verlassen, der durch die beiliegenden Ansprüche definiert ist.

### Bezugszeichenliste:

- 10: Haus
- 12: Lüftungsgerät
- 14: Ansaugeinrichtung
- 16: Zuluftleitungen
- 18: Zuluftleitung
- 20: Schalldämpfer
- 22: Luftverteilerkasten
- 24: Zuluftleitung
- 26: Zuluftleitung
- 27: Zuleitung
- 28: Zuluftleitung
- 30: Luftdurchlaßgehäuse
- 32: Luftdurchlaßgehäuse
- 34: Abluftleitung
- 36: Abluftleitung
- 38: Abluftleitung
- 40: Abluftleitung
- 42: Abluftleitung
- 44: Verteilerkasten
- 45: Abluftleitung
- 46: Schalldämpfer
- 47: Abluftleitung
- 48: Luftauslaßgehäuse
- 50: Abluftleitung der Küchenhaube
- 52: Küchenhaube
- 54: Anschlußelement
- 56: Absperrventil
- 58: Wärmerückgewinnung (WRG)

## Patentansprüche

1. Raumlüftungssystem mit
- zumindest einer Zuluftleitung (16, 18, 24, 26, 27, 28),
- zumindest einer Abluftleitung (34, 36, 38, 40, 42, 45, 47),
- einem Lüftungsgerät (12) zum Ansaugen von Frischluft durch die Zuluftleitung (16, 18, 24, 26, 27, 28) und Ausstoßen von Abluft durch die Abluftleitung (34, 36, 38, 40, 42, 45, 47)
- ein Anschlußelement (54), über das eine Abluftleitung einer Küchenhaube (50) an die zumindest eine Abluftleitung (45) des Raumlüftungssystems angeschlossen ist,
- eine eine strömungstechnische Verbindung zwischen der Abluftleitung der Küchenhaube (50) und der Abluftleitung (45) wahlweise öffnende oder zumindest teilweise, absperrende Umschalteinrichtung, **gekennzeichnet durch**
- ein bei Überschreiten einer vorbestimmten Temperatur die Abluftleitung der Küchenhaube (50) absperrenden Absperrventil (56) zum Schutz vor Überhitzung und
wobei die Umschalteinrichtung derart eingerichtet ist, daß sie die strömungstechnische Verbindung zwischen Abluftleitung der Küchenhaube (50) und Abluftleitung (45) bei Erreichen einer vorbestimmten Temperatur absperrt, wobei die vorbestimmte Temperatur zum Absperren der strömungstechnischen Verbindung zwischen Abluftleitung der Küchenhaube (50) und Abluftleitung (45) geringer als die vorbestimmte Temperatur zum Absperren des Absperrventils ist.

2. Raumlüftungssystem nach Anspruch 1, wobei die Umschalteinrichtung die strömungstechnische Verbindung zwischen der Abluftleitung (50) und der Abluftleitung (45) wahlweise öffnet oder vollständig absperrt.

3. Raumlüftungssystem nach Anspruch 1 oder 2, wobei zusätzlich ein federbelastetes Absperrventil (56) zwischen Küchenhaube und Anschlusselement (54) angeordnet ist.

4. Raumtüftungssystem nach einem der vorhergehenden Ansprüche, wobei ein Temperatursensor in der Abluftleitung (45) und/oder in der Abluftleitung der Küchenhaube (50) und/oder in dem Anschlußelement (54) vorgesehen ist.

5. Raumlüftungssystem nach einem der vorhergehenden Ansprüche, das einen Wärmetauscher zum Wärmetausch zwischen Zu- und Abluft umfaßt.

6. Raumtüftungssystem nach einem der vorhergehenden Ansprüche, das einen Erdwärmetauscher umfaßt.

7. Raumlüftungssystem nach einem der vorhergehenden Ansprüche, das zumindest einen Filter aufweist.

## Claims

1. A room ventilation system having
- at least one supply air line (16, 18, 24, 26, 27, 28),
- at least one discharge air line (34, 36, 38, 40, 42, 45, 47),
- a ventilation unit (12) for sucking fresh air through the supply air line (16, 18, 24, 26, 27, 28) and expelling discharge air through the discharge air line (34, 36, 38, 40, 42, 45, 47),
- a connection element (54), by means of which a discharge air line of a kitchen hood (50) is connected to the at least one discharge air line (45) of the room ventilation system,
- a switching device which optionally opens or at least partially shuts off a flow connection between the discharge air line of the kitchen hood (50) and the discharge air line (45), **characterised by**
- a shutoff valve (56) for protection from overheating, which shuts off the discharge air line of the kitchen hood (50) when a predefined temperature is exceeded, and
wherein the switching device is set up in such a manner that it shuts off the flow connection between the discharge air line of the kitchen hood (50) and the discharge air line (45) when a predefined temperature is reached, wherein the predefined temperature for shutting off the flow connection between the discharge air line of the kitchen hood (50) and the discharge air line (45) is lower than the predefined temperature for shutting off the shutoff valve.

2. The room ventilation system according to Claim 1, wherein the switching device optionally opens or completely shuts off the flow connection between the discharge air line (50) and the discharge air line (45).

3. The room ventilation system according to Claim 1 or 2, wherein a spring-loaded shutoff valve (56) is additionally arranged between the kitchen hood and the connection element (54).

4. The room ventilation system according to one of the preceding claims, wherein a temperature sensor is provided in the discharge air line (45) and/or in the discharge air line of the kitchen hood (50) and/or in the connection element (54).

5. The room ventilation system according to one of the preceding claims, which comprises a heat exchanger for exchanging heat between the supply and discharge air.

6. The room ventilation system according to one of the preceding claims, which comprises a ground-coupled heat exchanger.

7. The room ventilation system according to one of the preceding claims, which has at least one filter.

## Revendications

1. Système de ventilation de pièces, avec :
- au moins un conduit d'arrivée d'air (16, 18, 24, 26, 27, 28),
- au moins un conduit d'évacuation d'air (34, 36, 38, 40, 42, 45, 47),
- un appareil de ventilation (12) pour l'aspiration d'air frais par le conduit d'arrivée d'air (16, 18, 24, 26, 27, 28) et pour l'évacuation d'air sortant par le conduit d'évacuation d'air (34, 36, 38, 40, 42, 45, 47),
- un élément de raccordement (54), par lequel un conduit d'évacuation d'air d'une hotte de cuisine (50) est raccordé à l'au moins un conduit d'évacuation d'air (45) du système de ventilation de pièces,
- un dispositif de commutation ouvrant ou fermant au moins partiellement une liaison fluidique entre le conduit d'évacuation d'air de la hotte de cuisine (50) et le conduit d'évacuation d'air (45), de façon sélective,
**caractérisé par**
une soupape d'arrêt (56) verrouillant le conduit d'évacuation d'air de la hotte de cuisine (50) lors d'un dépassement d'une température prédéfinie, pour protéger contre une surchauffe, et
dans lequel le dispositif de commutation est conçu de manière à verrouiller la liaison fluidique entre le conduit d'évacuation d'air de la hotte de cuisine (50) et le conduit d'évacuation d'air (45) lors de l'atteinte d'une température prédéfinie, la température prédéfinie pour le verrouillage de la liaison fluidique entre le conduit d'évacuation d'air de la hotte de cuisine (50) et le conduit d'évacuation d'air (45) est inférieure à la température prédéfinie pour le verrouillage de la soupape d'arrêt.

2. Système de ventilation de pièces selon la revendication 1, dans lequel le dispositif de commutation ouvre ou ferme complètement de façon sélective la liaison fluidique entre le conduit d'évacuation d'air de la hotte de cuisine (50) et le conduit d'évacuation d'air (45).

3. Système de ventilation de pièces selon la revendication 1 ou 2, dans lequel une soupape d'arrêt (56) sollicitée par ressort est montée entre la hotte de cuisine et l'élément de raccordement (54).

4. Système de ventilation de pièces selon l'une des revendications précédentes, dans lequel un capteur de température est prévu dans le conduit d'évacuation d'air (45) et/ou dans le conduit d'évacuation d'air de la hotte de cuisine (50) et/ou dans l'élément de raccordement (54).

5. Système de ventilation de pièces selon l'une des revendications précédentes, comprenant un échangeur de chaleur pour l'échange de chaleur entre l'air entrant et l'air sortant.

6. Système de ventilation de pièces selon l'une des revendications précédentes, comprenant un échangeur de chaleur géothermique.

7. Système de ventilation de pièces selon l'une des revendications précédentes, comportant au moins un filtre.
